# EUROPEAN PATENT SPECIFICATION

(11) **EP 3 413 698 B1**
(45) Date of publication and mention of the grant of the patent: **25.03.2020**
(21) Application number: 17713796.5
(22) Date of filing: 07.02.2017
(51) Int. Cl.: A01B 51/00, F16B 7/04

(54) **BEAM AND METHOD FOR FORMING SUCH A BEAM**
TRÄGER UND VERFAHREN ZUR ERZEUGUNG EINES SOLCHEN TRÄGERS
POUTRE ET PROCÉDÉ DE FORMATION D'UNE TELLE POUTRE

(30) Priority: 08.02.2016 SE 1650151
(43) Date of publication of application: 19.12.2018
(73) Proprietor: Väderstad Holding AB, 590 21 Väderstad (SE)
(72) Inventor: COLLIN, Morgan, 595 51 Mjölby (SE)
(74) Representative: AWA Sweden AB
(86) International application number: PCT/SE2017/050113
(87) International publication number: WO 2017/138868

(56) References cited:
- AU-B2- 409 764
- DE-A1- 19 601 273
- DE-U1- 20 302 128
- US-A- 4 570 408

## Description

### Technical field

This document relates to a method for joining beams together, a beam formed from beam segments that have been joined together according to the method, and an agricultural implement comprising at least one such beam.

### Background

It is known to manufacture agricultural implements such as harrows, cultivators, seed drills, plows and the like which comprise a frame supporting one or more containers, feeder systems, row units and/or soil-working tools.

In such agricultural implements, the frame performs an important function in being able to support all the components without being deformed too much.

The frame is generally built up from one or more beams, usually of steel, which are joined together by welding, screwed connections, flanged connections and/or riveted connections, or similar.

The beams can have any desired cross section but, for weight reasons for example, they are often hollow and usually square, rectangular or circular in cross section.

As the need for larger agricultural implements increases, i.e. in practice often wider and/or longer agricultural implements, there is also an increasing need for larger frames. Consequently, there is a need to be able to use longer beams.

Although long beams made in one piece are available, they can give rise to challenges in existing production facilities, for example on account of handling equipment (transporting, lifting, etc.) or machining equipment (cutting, painting, welding stations, etc.) not being designed to handle such long beams.

There is therefore a need to be able to perform jointing of beams, i.e. being able to join several beams together short side to short side in order to form a longer beam.

DE-U-20302128 discloses a prior art method of joining beams.

A particular challenge as regards agricultural implements is that it is desirable to maintain the outer profile of the beam so that tools, row units or other components will be able to be fitted, for example with the aid of clamps, anywhere along the beam, without restrictions of the kind that arise from many known jointing methods.

There is therefore a need for improved methods for jointing of beams.

### Summary

A general aim is therefore to provide an improved method for jointing of beams, especially of beams that have already been surface treated in such a way that, for example, welding is undesirable. Particular aims are to provide a jointing method which provides the greatest possible freedom in placing components along the frame, and which is simple to carry out and provides a good load-bearing capacity.

According to a first aspect, a method is provided for joining beam portions together, short side to short side, so as to form a beam. The method involves providing first and second hollow beam portions which have substantially identical cross sections comprising a first pair of opposite inner surface portions and a second pair of opposite inner surface portions which are located substantially at right angles to the first pair of surface portions, providing first and second jointing elements, inserting the jointing elements into the cavities of both beam portions such that each of the jointing elements bears against one of the first inner surface portions, respectively, and against both of the second inner surface portions. The method further involves providing at least one wedge which is inserted between the jointing elements such that these are pressed in a direction away from each other and toward a respective first inner surface portion, and providing at least one pressure-generating connector, which presses the second inner surface portions in a direction toward each other, such that the jointing elements are clamped between the second inner surface portions.

The expression "providing" is to be interpreted as meaning to supply, form or manufacture.

The jointing elements can preferably be elongate rod or beam elements with a profile which is chosen so that at least two such jointing elements will be able to be fitted alongside each other within the cavities of the beam portions.

A length of the jointing elements may be of the order of 2-10 times the height of the cavity, preferably 3-8 or 4-6 times the height of the cavity, seen parallel to the direction of action of the pressure-generating connectors.

By positioning jointing elements within the beam in the manner described above, a transfer of forces can in principle be obtained which is advantageous from the point of view of fatigue.

The method can further involve arranging said pressure-generating connectors in engagement with a surface portion which is inwardly recessed toward the cavity relative to a transition portion between one of the first surface portions and one of the second surface portions.

For example, the first pair of surface portions and/or the second pair of surface portions can be recessed relative to corner portions that form said transition portions.

By recessing a surface portion, especially a surface portion with which pressure-generating connectors cooperate, it is possible, for example, for bolt heads to be sufficiently recessed to be able to position clamps without regard to the position of the bolts.

For example, the beam portions can comprise at least one pair of surface portions that are recessed in a direction toward each other. These recessed surface portions are preferably the surface portions with which the pressure-generating connectors cooperates.

According to the method, at least one of the jointing elements can have a substantially U-shaped profile comprising a web and two flanges, wherein distal portions of the flanges are brought to bear against one of the first inner surface portions.

According to the method, a play can be present between the jointing elements and said second surface portions while the jointing elements are being inserted into the beam portions, wherein said pressure-generating connectors are brought into action so that the play is eliminated.

The load from the pressure-generating connector can be arranged parallel to the longitudinal direction of the web, seen in the cross section of the jointing elements, such that a compressive force is provided in the longitudinal direction of the web.

Here, "longitudinal direction of the web" means a direction that extends between the flanges and at right angles to the longitudinal direction of the jointing elements.

At least one pair of oppositely directed wedges can be provided, and the wedges of said pair can be pressed toward each other with the aid of a second pressure-generating connector.

Said second pressure-generating connector can engage with said wedges through openings in said second surface portions.

The method can further involve locking the jointing elements relative to each other, such that the jointing elements are prevented from being moved relative to each other in the longitudinal direction of the portion.

This can be achieved with the aid of a locking part engaging with the jointing elements. The locking part can comprise a part that is inserted into recesses in the jointing elements. The part can have the shape of a washer or pin, for example, which engages with recesses or holes in the jointing elements. For example, such recesses or holes can be arranged in surfaces of the jointing elements that face toward each other, such as the above-mentioned beam web.

The method can further involve at least one of the jointing elements being prevented from being moved relative to one of the beam portions, such that the jointing element is prevented from being moved relative to the longitudinal direction of said beam portion when the jointing element is inserted into the second of the beam portions.

For example, the locking part can be allowed to engage with one of said pressure-generating connectors. A way of doing this is to give the locking part the form of a washer with a through-hole, wherein a pin forming part of the connector (for example a bolt) passes through the hole and though holes in the second surface portions.

The method can further involve providing a safety part for taking up an axial tensile load between the beam portions through form based engagement.

For example, a safety part can comprise at least one washer, which engages with pressure-generating connectors located on respective sides of a joint.

According to a second aspect, a beam is provided for forming a supporting structure in an agricultural implement, comprising a first beam portion, and a second beam portion, which has a short side that is joined to a short side of the first beam portion. Respective cavities are present inside the beam portions. The beam portions have substantially identical cross sections comprising a first pair of opposite inner surface portions and a second pair of opposite inner surface portions which are located substantially at right angles to the first pair of surface portions. First and second jointing elements are arranged inside said cavities and have an extent within both beam portions. Each of the jointing elements bears against one of the first inner surface portions, respectively, and against both of the second inner surface portions. At least one wedge is inserted between the jointing elements, such that these are pressed in a direction away from each other and toward a respective first inner surface portion, and at least one pressure-generating connector is designed to press the second inner surface portions in a direction toward each other, such that the jointing elements are clamped between the second inner surface portions.

The beam portions can have a substantially rectangular or square cross section, such that said surface portions are substantially plane.

The expression "substantially rectangular or square" means that the cross section can be rectangular or square except for possible radii at transitions between surface portions.

At least one of said first and second surface portions can be inwardly recessed toward the cavity relative to a transition portion between one of the first surface portions and one of the second surface portions.

At least one of the jointing elements can have a substantially U-shaped profile comprising a web and two flanges, wherein distal portions of the flanges can bear against one of the first inner surface portions.

At least one of the second surface portions can be deformed in a direction toward the jointing elements, such that the second surface portions bear against the jointing elements.

The beam can comprise at least one pair of oppositely directed wedges which are pressed toward each other with the aid of a second pressure-generating connector.

Said second pressure-generating connector can engage with said wedges through openings in said second surface portions.

Said wedge can comprise a substantially prismatic body with a pair of wedge surfaces that together form an acute angle, and a pressure surface with a surface normal that coincides with a line dividing the angle into two equal angles.

By providing a prismatic body, a linear contact with each jointing element can be provided.

The wedge can moreover comprise a through-hole extending parallel to the surface normal. A bolt can be inserted through the hole such that bolt head and nut are able to cooperate with a respective pressure surface, with the result that the wedges are pressed toward each other when the nut is screwed tight.

The beam can further comprise a locking part which is designed to lock the jointing elements relative to each other, in order to prevent relative movement between the jointing elements along the longitudinal direction of the beam.

The beam can further comprise a locking arrangement which is designed to lock at least one of the jointing elements relative to one of the beam portions, such that said jointing element is prevented from being moved along the longitudinal direction of the beam when the jointing element is inserted into the second of the beam portions.

The locking arrangement can be integrated with the abovementioned locking part.

The beam can thus be provided with a locking part engaging with the jointing elements. The locking part can comprise a part that is inserted into recesses in the jointing elements, preferably in the beam web of the jointing elements. The locking part can, for example, have the form of a washer or pin, which engages with recesses or holes in the jointing elements. For example, such recesses or holes can be arranged in surfaces of the jointing elements that face toward each other, such as the abovementioned beam webs. By having one or more of the pressure-generating connectors engage with the locking part, the jointing elements are locked relative to each other and also relative to one of the beam portions.

The beam can moreover comprise a safety part for taking up an axial tensile load between the beam portions through form based engagement.

According to a third aspect, an agricultural implement is provided comprising a frame, which comprises at least one beam in accordance with what has been described above.

The frame of the agricultural implement can thus be formed from one or more beams in accordance with what has been described above. Such beams can be joined together by welds, rivets, bolts or similar connectors in order to form the frame.

### Brief description of the drawings

Fig. 1 shows a beam assembled from a pair of beam portions.
Fig. 2 shows the beam from Fig. 1 seen from above.
Fig 3. shows a longitudinal cross section of the beam from Figs 1 and 2 along the line A-A in Fig. 2.
Fig. 4 shows the beam from Figs 1-3 seen from the long side.
Fig 5. shows a cross section of the beam from Figs 1-4 along the line B-B in Fig. 3.
Fig. 6 shows the beam from Figs 1-5 seen from the short side.
Fig. 7 shows a perspective view of the beam from Figs 1-6, with one beam portion removed.
Fig. 8 shows a wedge for use when assembling the beam.

### Detailed description

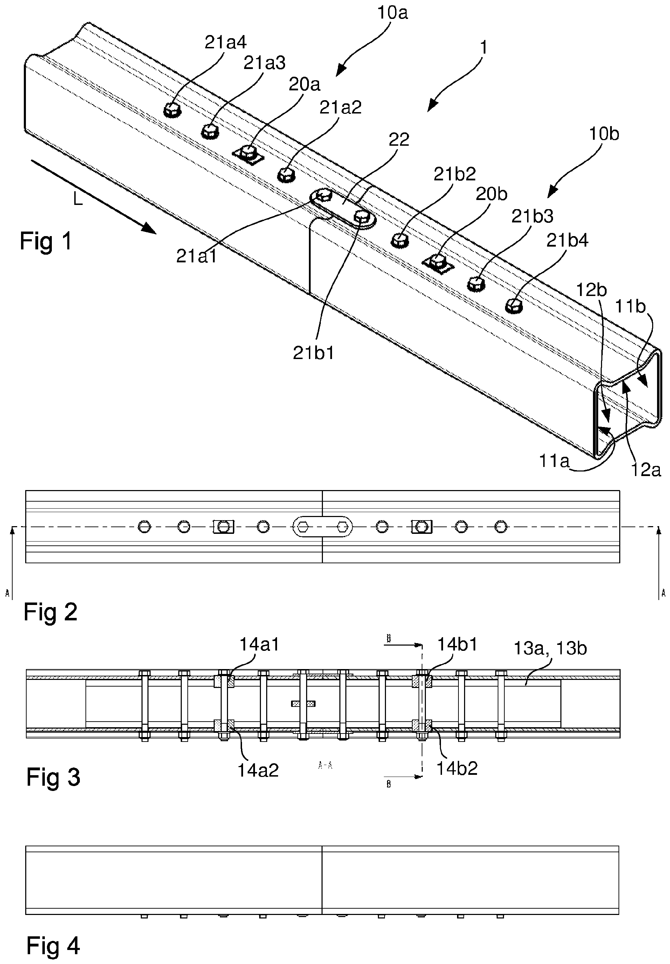

With reference to Fig. 1, a beam 1 is shown which is composed of two beam portions 10a, 10b that have been joined together, short side to short side, along a joining plane.

In the example shown, the joining plane is at right angles to the longitudinal direction L of the beam. However, this is not necessary. The joining plane can be angled relative to the longitudinal direction of the beam, for example at an angle of as much as 30°-90°, preferably 45°-90°.

The illustrated beam 1 and the beam portions 10a, 10b have what is referred to as an "hourglass-shaped" cross section, meaning that they have been shaped so as to have a pair of opposite sides with inwardly recessed surface portions, and a pair of opposite sides that are flat.

An hourglass-shaped cross section can be formed by a process in which a beam blank with a rectangular or square cross section is rolled in a manner known per se. Hollow and hourglass-shaped beam profiles of this kind are used especially when it is desirable to be able to use the resulting flanges for engagement with clamps or other types of assembly devices, and/or when it is desirable to be able to recess bolt heads, for example, or other fastening elements such that these do not interfere with, for example, clamps or assembly devices of a type extending around all or part of the beam, resulting in greater freedom in terms of assembling equipment such as row units along the length of the beam.

The beam portions 10a, 10b and therefore the beam 1 are hollow, i.e. they form a cavity with a first pair of opposite, inwardly facing wall portions 11a, 11b and a second pair of opposite, inwardly facing wall portions 12a, 12b. The wall portions 12a, 12b of the second pair are oriented substantially at right angles to the wall portions 11a, 11b of the first pair.

It will be appreciated that the concept disclosed herein can be used on beam portions and beams that have a cross section with no recessed sides, and also on beam portions and beams that have, for example, a circular or oval cross section.

A pair of jointing elements 13a, 13b have been arranged in the cavity of the beam portions. The jointing elements can be in the form of beam blanks or rod blanks having a length corresponding to about 2-10 times the height of the cavity, preferably 3-8 times or 4-6 times the height of the cavity.

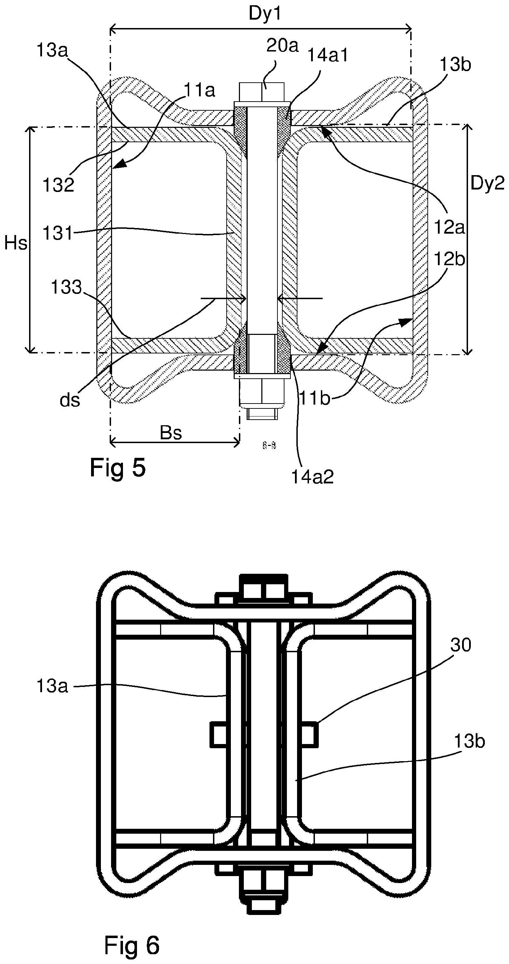

With reference to Fig. 5, these beam blanks or rod blanks can have a height Hs corresponding to about 95-99.9% of a distance Dy2 between the second opposite surface portions 12a, 12b. The height Hs will be such that the jointing elements can be inserted without obstruction into the cavities of the beam portions, which means that a certain play should be present, especially as regards tolerances. However, the height will only be such that the surface portions 12a, 12b can be pressed in a direction toward each other so as to bear on opposite side surfaces of the jointing element.

Moreover, these beam blanks or rod blanks can have a width Bs that is less than half of a distance Dy1 between the first surface portions 11a, 11b. The width Bs can preferably be such that Dy1 > 2Bs+ds, where ds is the diameter of a wedge bolt, which will be discussed below.

In the example shown, the jointing elements 13a, 13b are formed by beams with a substantially U-shaped profile, i.e. by beams comprising a beam web 131 that extends between a pair of flanges 132, 133. The proximal portions of the flanges 132, 133 adjoin respective ends of the beam web, and the distal portions of the flanges extend parallel to each other, at right angles to a main plane of the beam web 131.

In the example shown, the jointing elements are formed by beam blanks having a U-shaped profile, where each U-shaped profile is directed such that the beam web 131 extends parallel to the first surface portions 11a, 11b and such that distal portions of the flanges 132, 133 of the U-shaped profile bear against the same first surface portion 11a, 11b.

The two jointing elements thus face in opposite directions, such that one jointing element bears on one of the two first surface portions 11a and the second jointing element bears on the second of the two first surface portions 11b.

Connectors in the form of nut-and-bolt connectors are arranged between the jointing elements 13a, 13b.

These connectors comprise clamping bolts 21a1, 21a2, 21a3, 21a4, 21b1, 21b2, 21b3, 21b4 which are designed to produce a compressive force that presses the second surface portions 12a, 12b toward each other. The head of the of the clamping bolts 21a1, 21a2, 21a3, 21a4, 21b1, 21b2, 21b3, 21b4, or the nut, thus bears on the outside of the second surface portions 12a, 12b.

By tightening the clamping bolts, the second surface portions 12a, 12b are pressed toward each other and deformed, preferably only elastically, such that the surface portions 12a, 12b come into contact with the jointing elements, and the jointing elements are clamped between the surface portions 12a, 12b.

The connectors moreover comprise wedge elements 14a1, 14a2, 14b1, 14b2 and wedge bolts 20a, 20b.

The wedge elements are arranged such that their wedge surfaces protrude into the space that is present between adjacent jointing elements 13a, 13b. In the example shown, there is a pair of opposite wedge elements which act on the same portion of the respective jointing element, seen in the longitudinal direction of the jointing elements (which is parallel to the longitudinal direction L of the beam).

A wedge bolt is designed to connect this pair of opposite wedge elements such that a wedge bolt head bears on one of the wedge elements, directly or via one or more washers, and the wedge bolt nut bears on the second of the wedge elements, directly or via one or more washers.

By tightening the wedge bolt, the wedge elements are pressed toward each other, such that the wedge surfaces force the jointing elements in a direction away from each other, and the distal portions of the flanges 132, 133 are pressed against the first surface portions 11a, 11b.

While the clamping bolts 21a1, 21a2, 21a3, 21a4, 21b1, 21b2, 21b3, 21b4 engage with the second surface portions 12a, 12b though holes which are smaller than the bolt head and nut, the wedge bolts are inserted through openings which are the same size as or larger than the bolt head or nut. The openings can preferably have a shape corresponding to the shape of the wedge, seen in projection on the second surface portions 12a, 12b, such that engagement between wedge bolt and/or wedge, on the one hand, and second surface portions 12a, 12b, on the other hand, is completely avoided, at least seen in a direction parallel to the extent of the wedge bolts.

With reference to Fig. 1, one or more safety parts 22 can be produced which are configured to take up a tensile load in the longitudinal direction of the beam 1. For example, a safety part 22 can be provided in each recessed surface portion of the beam profile, i.e. one on the upper side and one on the underside. Such safety parts can be designed and dimensioned to take up a considerable load in the longitudinal direction of the beam. It will be appreciated that the safety part can have a longer extent along the longitudinal direction of the beam than is shown in the drawings, and that the safety part 22 on at least one side of the joining plane can engage with more than one clamping bolt 21a1, 21a3; 21a2, 21a4. The safety part can engage with a pair of clamping bolts arranged on respective sides of the joining plane. For example, the safety part can be designed as an elongate washer with through-holes for respective clamping bolts.

A safety part of this kind can be arranged on one or both opposite sides of the beam 1. The safety part 22 is preferably arranged on those sides that have recessed surface portions in accordance with what is shown in Fig. 1.

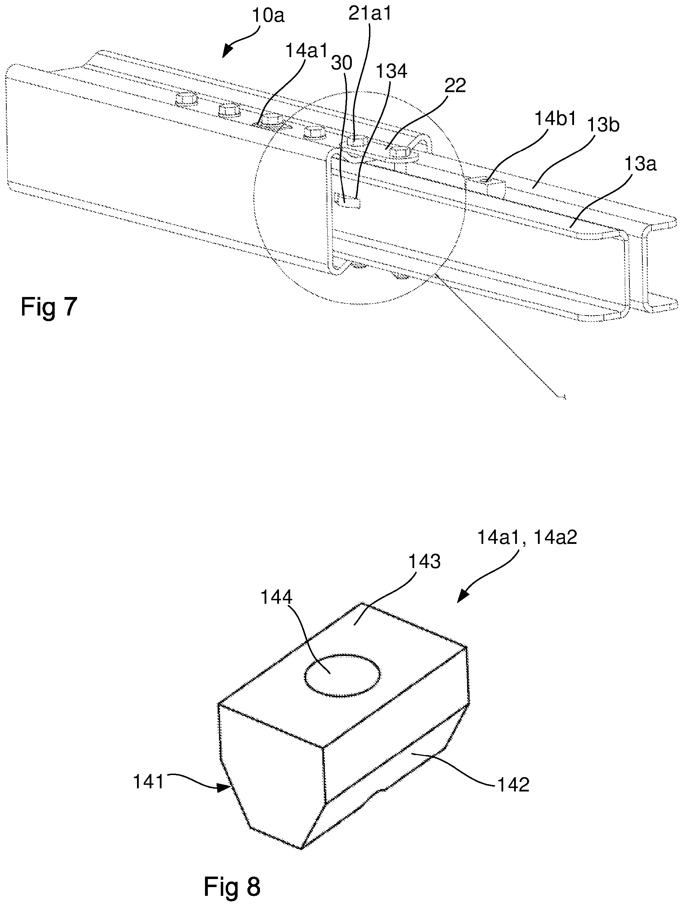

With reference to Figs 6 and 7, the jointing elements 13a, 13b can be provided with one or more locking arrangements 134, 30 for locking the jointing elements relative to each other, at least in the longitudinal direction L of the beam.

For example, a pair of recesses 134, such as through-holes, can be produced at one or more locations along the length of the jointing elements 13a, 13b, such that recess 134 on one jointing element 13a coincides in height and length with a corresponding recess in the second jointing element 13b.

In the embodiment shown, a pair of such holes 134 or openings are arranged at a location in the longitudinal direction L of the beam corresponding to a pressure-generating connector 21a1 positioned closest to the joining plane.

A locking washer 30 can be arranged such that it engages with both recesses 134, and relative movement between the jointing elements 13a, 13b is prevented.

The locking washer 30 can optionally be provided with a through-hole, and a clamping bolt can extend through the hole and thus also prevent relative movement between the beam portion 10a and the jointing elements 13a, 13b.

With reference to Fig. 8, the wedge element 14a1, 14a2, 14b1, 14b2 can be designed as a prism with a pair of wedge surfaces 141, 142 which form an actuate angle with each other, and a bearing pressure surface 143 whose surface normal extends in a direction that is parallel to a plane that divides the angle between the wedge surfaces into two parts of equal size.

The wedge element itself can have any desired cross section, for example triangular or, as is shown in Fig. 8, pentagonal.

The wedge element can have a through-hole 144, of which the diameter is adapted to the wedge bolt that is to be used.

The wedge element can have a length of ca. 25-50 mm parallel to the longitudinal direction.

Beam portions 10a, 10b can be joined together to form a beam in the manner described below.

End portions of the beam portions 10a, 10b that are to be joined together are provided with holes for clamping bolts and with openings for wedge bolts and wedge elements.

Jointing elements 13a, 13b are produced with the desired length.

A pair of jointing elements 13a, 13b are arranged web to web and inserted into the cavity of the beam portion 10a such that distal portions of the flanges face toward the first surface portions 11a, 11b. The jointing elements can be inserted into the first beam portion 101 to a length of up to 40-70% of the length of the jointing elements, preferably at least 50%.

All the parts can thus be in position in one beam portion, but with neither the clamping bolts nor wedge bolts tightened. While the jointing elements are inserted into said first and second beam portions, play can be present between the distal portions of the flanges 132, 133 and the first inner surfaces 11a, 11b and also between the flanges 132, 133 and the second inner surfaces 12a, 12b.

The second beam portion 10b is pushed on over the jointing elements 13a 13b. If no locking arrangement 134, 30 is used, this moment may require some care in order to ensure that the jointing elements are not moved completely into the first beam portion 10a.

Wedge elements 14a1, 14a2, 14b1, 14b2 are then inserted through respective openings into respective second surface portions 12a, 12b, after which wedge bolts are mounted in the holes 144.

The wedge bolts are then tightened such that the jointing elements are pressed out toward the first surface portions 11a, 11b, and the play between distal portions of the flanges 132, 133 and the first surface portions 11a, 11b is eliminated.

Clamping bolts 21b1, 21b2, 21b3, 21b4 are arranged in holes provided for them but are not tightened until the wedge bolts have been tightened.

After the wedge bolts have been tightened, the clamping bolts are tightened such that the second surface portions 12a, 12b are pressed in a direction toward each other and come into contact with the jointing elements 13a, 13b. The play between the flanges 132, 133 and the second inner surfaces 12a, 12b is thereby eliminated.

Both clamping bolts and also wedge bolts are tightened in order to give the beam the ability to transfer tensile stresses in the longitudinal direction L. This tensile stress can be distributed between frictional connectors, provided by the wedge bolts and the clamping bolts, and possible safety parts 22.

If locking arrangements 134, 30 are to be used, the jointing elements are expediently provided with holes 134 during their production, for example by laser cutting. When the jointing elements 13a, 13b have been arranged in the first beam portion, the locking washer 30 can be arranged in the holes 134, and corresponding clamping bolts can be inserted through the hole in the locking washer 30 and engaged with respective holes in the second surface portions 12a, 12b.

If one or more safety parts 22 are to be used, these too can be mounted when corresponding clamping bolts are being mounted in the first beam portion 10a.

The beam portions 10a, 10b are generally steel beams, even though the assembly concept disclosed herein can also be used on beams made of other metallic materials or on beams made of polymer material.

The jointing elements 13a, 13b can also be made of steel, or of another material that is deemed suitable in respect of the material of the beam portions that are to be joined together. For example, the material of the jointing elements can be the same as in the beam portions.

The wedge elements 14a1, 14a2, 14b1, 14b2 can also be made of any suitable material that is chosen with respect to the material of the beam portions and the jointing elements.

The locking washer 30 can be made of any chosen material, since it does not perform any function in the load transfer that is to be provided by the finished beam 1.

As has been mentioned, this method for jointing of beam portions 10a, 10b is therefore especially suitable for rectangular or square beam cross sections, especially when these have an hourglass shape.

By using an hourglass shape with sufficient recessing of surface portions 12a, 12b, the extent by which the bolt head, the bolt ends and the nuts protrude from the beam can be reduced or entirely eliminated.

This increases the freedom by which mechanical parts, such as soil-working tools, row units or the like, can be placed at any desired positions along the length of jointed beams. This effect is especially noticeable when such positioning takes place with the aid of clamps that surround the beam.

## Claims

1. A method for joining beam portions (10a, 10b) together, short side to short side, so as to form a beam (1), which method involves:
providing first and second hollow beam portions (10a, 10b) which have substantially identical cross sections comprising a first pair of opposite inner surface portions (11a, 11b) and a second pair of opposite inner surface portions (12a, 12b) which are located substantially at right angles to the first pair of surface portions,
providing first and second jointing elements (13a, 13b),
inserting the jointing elements (13a, 13b) into the cavities of both beam portions such that each of the jointing elements bears against one of the first inner surface portions (11a, 11b), respectively, and against both of the second inner surface portions (12a, 12b),
**characterized by**
providing at least one wedge (14a, 14b) which is inserted between the jointing elements (13a, 13b) such that these are pressed in a direction away from each other and toward a respective first inner surface portion (11a, 11b), and
providing at least one pressure-generating connector (21a1-21a4; 21b1-21b4), which presses the second inner surface portions (12a, 12b) in a direction toward each other, such that the jointing elements are clamped between the second inner surface portions (12a, 12b).

2. The method according to claim 1, further comprising arranging said pressure-generating connectors (21a1-21a4; 21b1-21b4) in engagement with a surface portion which is inwardly recessed toward the cavity relative to a transition portion between one of the first surface portions and one of the second surface portions.

3. The method according to either of the preceding claims,
wherein at least one of the jointing elements (13a, 13b) has a substantially U-shaped profile comprising a web (131) and two flanges (132, 133),
wherein distal portions of the flanges (132, 133) are brought to bear against one of the first inner surface portions (11a, 11b).

4. The method according to any one of the preceding claims,
wherein a play is present between the jointing elements (13a, 13b) and said second surface portions (12a, 12b) while the jointing elements (13a, 13b) are being inserted into the beam portions (10a, 10b), and
wherein said pressure-generating connectors (21a1-21a4; 21b1-21b4) are brought into action so that the play is eliminated.

5. The method according to claim 4, wherein the load from the pressure-generating connector (21a1-21a4; 21b1-21b4) is applied parallel to the longitudinal direction of the web (131), seen in the cross section of the jointing elements, such that a compressive force is provided in the longitudinal direction of the web.

6. The method according to any one of the preceding claims, wherein at least one pair of oppositely directed wedges (14a1, 14a2; 14b1, 14b2) is provided, and wherein the wedges of said pair are pressed toward each other with the aid of a second pressure-generating connector (20a, 20b).

7. The method according to claim 6, wherein said second pressure-generating connector (20a, 20b) engages with said wedges (14a1, 14a2; 14b1, 14b2) through openings in said second surface portions (12a, 12b).

8. The method according to any one of the preceding claims, which method further involves locking the jointing elements (13a, 13b) relative to each other, such that the jointing elements are prevented from being moved relative to each other in the longitudinal direction of the portion.

9. The method according to any one of the preceding claims, which method further involves preventing at least one of the jointing elements (13a, 13b) from being moved relative to one of the beam portions (10a), such that the jointing element is prevented from being moved relative to said beam portion in the longitudinal direction of the beam when the jointing element is inserted into the second of the beam portions (10b).

10. The method according to any one of the preceding claims, which method further involves providing a safety part (22) for taking up an axial tensile load between the beam portions (10a, 10b) through form based engagement.

11. A beam (1) for forming a supporting structure in an agricultural implement, comprising:
a first beam portion (10a), and
a second beam portion (10b), which has a short side that is joined to a short side of the first beam portion,
wherein respective cavities are present inside the beam portions (10a, 10b), and
wherein the beam portions (10a, 10b) have substantially identical cross sections comprising a first pair of opposite inner surface portions (11a, 11b) and a second pair of opposite inner surface portions (12a, 12b) which are located substantially at right angles to the first pair of surface portions,
further comprising:
first and second jointing elements (13a, 13b), which are arranged inside said cavities and have an extent within both beam portions,
wherein each of the jointing elements bears against one of the first inner surface portions (11a, 11b), respectively, and against both of the second inner surface portions (12a, 12b),
**characterized by**
at least one wedge (14a, 14b), which is inserted between the jointing elements (13a, 13b), such that these are pressed in a direction away from each other and toward a respective first inner surface portion (11a, 11b), and
at least one pressure-generating connector (21a1-21a4; 21b1-21b4), which is designed to press the second inner surface portions (12a, 12b) in a direction toward each other, such that the jointing elements are clamped between the second inner surface portions (12a, 12b).

12. The beam according to claim 11, wherein the beam portions have a substantially rectangular or square cross section, such that said surface portions are substantially plane.

13. The beam according to claim 11 or 12, wherein at least one of said first and second surface portions is inwardly recessed toward the cavity relative to a transition portion between one of the first surface portions (11a, 11b) and one of the second surface portions (12a, 12b).

14. The beam according to any one of claims 11-13, wherein said wedge comprises a substantially prismatic body with a pair of wedge surfaces that together form an acute angle, and a pressure surface with a surface normal that coincides with a line dividing the angle into two equal angles.

15. An agricultural implement comprising a frame, which comprises at least one beam according to any one of claims 11-14.

## Patentansprüche

1. Verfahren zum Verbinden von Trägerabschnitten (10a, 10b) miteinander, kurze Seite an kurze Seite, um einen Träger (1) zu bilden, wobei das Verfahren umfasst:
Vorsehen eines ersten und zweiten hohlen Trägerabschnitts (10a, 10b), welche im Wesentlichen identische Querschnitte aufweisen, die ein erstes Paar von gegenüberliegenden inneren Flächenabschnitten (11a, 11b) und ein zweites Paar von gegenüberliegenden inneren Flächenabschnitten (12a, 12b) umfassen, die sich im Wesentlichen in rechten Winkeln zu dem ersten Paar von Flächenabschnitten befinden,
Vorsehen eines ersten und zweiten Verbindungselements (13a, 13b),
derartiges Einsetzen der Verbindungselemente (13a, 13b) in die Hohlräume von beiden Trägerabschnitten, dass jedes der Verbindungselemente jeweils gegen einen der ersten inneren Flächenabschnitte (11a, 11b) und gegen beide der zweiten inneren Flächenabschnitte (12a, 12b) anliegt,
**gekennzeichnet durch**
Vorsehen mindestens eines Keils (14a, 14b), der zwischen den Verbindungselementen (13a, 13b) derart eingesetzt wird, dass diese in einer Richtung weg voneinander und hin zu einem jeweiligen ersten inneren Flächenabschnitt (11a, 11b) gedrückt werden, und
Vorsehen mindestens eines Druck erzeugenden Verbinders (21a1-21a4; 21b1-21b4), der die zweiten inneren Flächenabschnitte (12a, 12b) in eine Richtung hin zueinander derart drückt, dass die Verbindungselemente zwischen den zweiten inneren Flächenabschnitten (12a, 12b) geklemmt werden.

2. Verfahren nach Anspruch 1, ferner umfassend Anordnen der Druck erzeugenden Verbinder (21a1-21a4; 21b1-21b4) in Eingriff mit einem Flächenabschnitt, der hin zu dem Hohlraum relativ zu einem Übergangsabschnitt zwischen einem von den ersten Flächenabschnitten und einem von den zweiten Flächenabschnitten nach innen vertieft ist.

3. Verfahren nach einem der vorhergehenden Ansprüche,
wobei mindestens eines der Verbindungselemente (13a, 13b) ein im Wesentlichen U-förmiges Profil aufweist, das einen Steg (131) und zwei Flansche (132, 133) umfasst,
wobei distale Abschnitte der Flansche (132, 133) dazu gebracht werden, gegen einen von den ersten inneren Flächenabschnitten (11a, 11b) anzuliegen.

4. Verfahren nach einem der vorhergehenden Ansprüche,
wobei ein Spiel zwischen den Verbindungselementen (13a, 13b) und den zweiten Flächenabschnitten (12a, 12b) vorliegt, während die Verbindungselemente (13a, 13b) in die Trägerabschnitte (10a, 10b) eingesetzt werden, und
wobei die Druck erzeugenden Verbinder (21a1-21a4; 21b1-21b4) derart in Wirkung gebracht werden, dass das Spiel entfernt wird.

5. Verfahren nach Anspruch 4, wobei die Last von dem Druck erzeugenden Verbinder (21a1-21a4; 21b1-21b4) parallel zu der Längsrichtung des Steges (131), in dem Querschnitt der Verbindungselemente betrachtet, derart aufgebracht wird, dass eine Kompressionskraft in der Längsrichtung des Steges erzeugt wird.

6. Verfahren nach einem der vorhergehenden Ansprüche, wobei mindestens ein Paar von entgegengesetzt gerichteten Keilen (14a1, 14a2; 14b1, 14b2) vorgesehen ist und wobei die Keile des Paares mit Hilfe eines zweiten Druck erzeugenden Verbinders (20a, 20b) zueinander hin gedrückt werden.

7. Verfahren nach Anspruch 6, wobei der zweite Druck erzeugende Verbinder (20a, 20b) mit den Keilen (14a1, 14a2; 14b1, 14b2) durch Öffnungen in den zweiten Flächenabschnitten (12a, 12b) in Eingriff kommt.

8. Verfahren nach einem der vorhergehenden Ansprüche, wobei das Verfahren ferner ein derartiges Verriegeln der Verbindungselemente (13a, 13b) relativ zueinander, dass verhindert wird, dass sich die Verbindungselemente relativ zueinander in der Längsrichtung des Abschnitts bewegen, umfasst.

9. Verfahren nach einem der vorhergehenden Ansprüche, wobei das Verfahren ferner ein derartiges Verhindern, dass sich mindestens eines der Verbindungselemente (13a, 13b) relativ zu einem der Trägerabschnitte (10a) bewegt, dass verhindert wird, dass sich das Verbindungselement relativ zu dem Trägerabschnitt in der Längsrichtung des Trägers bewegt, wenn das Verbindungselement in den zweiten der Trägerabschnitte (10b) eingesetzt wird, umfasst.

10. Verfahren nach einem der vorhergehenden Ansprüche, wobei das Verfahren ferner ein Vorsehen eines Sicherheitsteils (22) zum Aufnehmen einer axialen Zuglast zwischen den Trägerabschnitten (10a, 10b) durch einen formbasierten Eingriff umfasst.

11. Träger (1) zum Bilden einer tragenden Struktur in einem landwirtschaftlichen Gerät, umfassend:
einen ersten Trägerabschnitt (10a) und
einen zweiten Trägerabschnitt (10b), der eine kurze Seite aufweist, welche mit einer kurzen Seite des ersten Trägerabschnitts verbunden ist,
wobei jeweilige Hohlräume im Inneren der Trägerabschnitte (10a, 10b) vorliegen und
wobei die hohlen Trägerabschnitte (10a, 10b) im Wesentlichen identische Querschnitte aufweisen, die ein erstes Paar von gegenüberliegenden inneren Flächenabschnitten (11a, 11b) und ein zweites Paar von gegenüberliegenden inneren Flächenabschnitten (12a, 12b) umfassen, die sich im Wesentlichen in rechten Winkeln zu dem ersten Paar von Flächenabschnitten befinden,
ferner umfassend:
ein erstes und zweites Verbindungselement (13a, 13b), die im Inneren der Hohlräume angeordnet sind und eine Erstreckung innerhalb beider Trägerabschnitte aufweisen,
wobei jedes der Verbindungselemente jeweils gegen einen der ersten inneren Flächenabschnitte (11a, 11b) und gegen beide der zweiten inneren Flächenabschnitte (12a, 12b) anliegt,
**gekennzeichnet durch**
mindestens einen Keil (14a, 14b), der zwischen den Verbindungselementen (13a, 13b) derart eingesetzt ist, dass diese in einer Richtung weg voneinander und hin zu einem jeweiligen ersten inneren Flächenabschnitt (11a, 11b) gedrückt sind, und
mindestens einen Druck erzeugenden Verbinder (21a1-21a4; 21b1-21b4), der ausgebildet ist, um die zweiten inneren Flächenabschnitte (12a, 12b) in eine Richtung hin zueinander derart zu drücken, dass die Verbindungselemente zwischen den zweiten inneren Flächenabschnitten (12a, 12b) geklemmt sind.

12. Träger nach Anspruch 11, wobei die Trägerabschnitte einen im Wesentlichen rechteckigen oder quadratischen Querschnitt derart aufweisen, dass die Flächenabschnitte im Wesentlichen eben sind.

13. Träger nach Anspruch 11 oder 12, wobei mindestens einer von den ersten und zweiten Flächenabschnitten hin zu dem Hohlraum relativ zu einem Übergangsabschnitt zwischen einem von den ersten Flächenabschnitten (11a, 11b) und einem von den zweiten Flächenabschnitten (12a, 12b) nach innen vertieft ist.

14. Träger nach einem der Ansprüche 11-13, wobei der Keil einen im Wesentlichen prismatischen Körper mit einem Paar von Keilflächen, welche zusammen einen spitzen Winkel bilden, und eine Druckfläche mit einer Flächenormalen, welche mit einer Linie übereinstimmt, die den Winkel in zwei gleiche Winkel teilt, umfasst.

15. Landwirtschaftliches Gerät, umfassend einen Rahmen, der mindestens einen Träger nach einem der Ansprüche 11-14 umfasst.

## Revendications

1. Procédé d'assemblage de sections de poutres (10a, 10b) ensemble, de côté court à côté court, de manière à former une poutre (1), lequel procédé comprend :
la prévision de premières et secondes sections de poutres creuses (10a, 10b) qui ont des sections transversales substantiellement identiques comprenant une première paire de sections de surface intérieure opposées (11a, 11b) et une seconde paire de sections de surface intérieure opposées (12a, 12b) qui sont situées substantiellement à angle droit par rapport à la première paire de sections de surface,
la prévision de premiers et seconds éléments de jonction (13a, 13b),
l'insertion des éléments de jonction (13a, 13b) dans les cavités des deux sections de poutre de manière à ce que chacun des éléments de jonction porte contre une des premières sections de surface intérieure (11a, 11b) respectivement, et contre les deux secondes sections de surface intérieure (12a, 12b),
**caractérisé par**
la prévision d'au moins un coin (14a, 14b) qui est inséré entre les éléments de jonction (13a, 13b) de manière à ce que ceux-ci soient comprimés dans un sens en s'éloignant l'un de l'autre et vers une seconde section de surface respective (11a, 11b), et
la prévision d'au moins un connecteur générant de la pression (21a1-21a4 ; 21b1-21b4), qui comprime les secondes sections de surface intérieure (12a, 12b) les unes vers les autres de manière à ce que les éléments de jonction soient serrés entre les secondes sections de surface intérieure (12a, 12b).

2. Procédé selon la revendication 1, comprenant en outre la disposition desdits connecteurs générant de la pression (21a1-21a4 ; 21b1-21b4) en engagement avec une section de surface qui est en retrait vers l'intérieur en direction de la cavité par rapport à une section de transition entre une des premières sections de surface et une des secondes sections de surface.

3. Procédé selon l'une quelconque des revendications précédentes, dans lequel
au moins un des éléments de jonction (13a, 13b) a un profil substantiellement en forme de U comprenant une bande (131) et deux brides (132,133),
les sections distales des brides (132,133) sont amenées à porter contre une des premières sections de surface intérieure (11a, 11b).

4. Procédé selon l'une quelconque des revendications précédentes, dans lequel
un jeu est présent entre les éléments de jonction (13a, 13b) et lesdites secondes sections de surface (12a, 12b) alors que les éléments de jonction (13a, 13b) sont en train d'être insérés dans les sections de poutre (10a, 10b), et
lesdits connecteurs générant de la pression (21a1-21a4 ; 21b1-21b4) sont mis en action de manière à éliminer le jeu.

5. Procédé selon la revendication 4, dans lequel la charge provenant du connecteur générant de la pression (21a1-21a4 ; 21b1-21b4) est appliquée parallèlement au sens longitudinal de la bande (131), vue dans le sens transversal des éléments de jonction, de sorte qu'une force de compression est fournie dans le sens longitudinal de la bande.

6. Procédé selon l'une quelconque des revendications précédentes, dans lequel au moins une paire de coins directement opposés (14a1, 14a2 ; 14b1, 14b2) est prévue, et les coins de ladite paire sont comprimés l'un vers l'autre à l'aide d'un second connecteur générant de la pression (20a, 20b).

7. Procédé selon la revendication 6, dans lequel ledit second connecteur générant de la pression (20a, 20b) s'engage par lesdits coins (14a1, 14a2 ; 14b1, 14b2) à travers des orifices desdites sections de surface (12a, 12b).

8. Procédé selon l'une quelconque des revendications précédentes, lequel procédé englobe en outre le verrouillage des éléments de jonction (13a, 13b) les uns par rapport aux autres, de sorte que les éléments de jonction sont empêchés de se déplacer les uns par rapport aux autres dans le sens longitudinal de la section.

9. Procédé selon l'une quelconque des revendications précédentes, lequel procédé englobe en outre le fait d'empêcher au moins un des éléments de jonction (13a, 13b) d'être déplacé vers une des sections de poutre (10a), de sorte que l'élément de jonction est empêché de se déplacer par rapport à ladite section de poutre dans le sens longitudinal de la poutre lorsque l'élément de jonction est inséré dans la seconde des sections de poutre (10b)

10. Procédé selon l'une quelconque des revendications précédentes, lequel procédé englobe en outre la prévision d'une pièce de sécurité (22) pour absorber une charge de tension axiale entre les sections de poutre (10a, 10b) grâce audit engagement basé sur la forme.

11. Poutre (1) destinée à la formation d'une structure support dans un instrument agricole, comprenant :
une première section de poutre (10a), et
une seconde section de poutre (10b) qui comporte un côté court qui est assemblé à un côté court de la première section de poutre,
des cavités respectives étant présentes dans les sections de poutre (10a, 10b), et
les sections de poutre (10a, 10b) ayant des sections transversales substantiellement identiques comprenant une première paire de sections de surface intérieure opposées (11a, 11b) et une seconde paire de sections de surface intérieure opposées (12a, 12b) qui se situent substantiellement à angle droit par rapport à la première paire de sections de surface,
comprenant en outre :
des premiers et seconds éléments de jonction (13a, 13b) qui sont disposés à l'intérieur desdites cavité et ont une extension dans les deux sections de poutre,
chacun des éléments de jonction portant contre une des premières sections de surface intérieure (11a, 11b) respectivement, et contre les deux secondes sections de surface intérieure (12a, 12b),
**caractérisée par**
au moins un coin (14a, 14b) qui est inséré entre les éléments de jonction (13a, 13b) de manière à ce que ceux-ci soient comprimés dans un sens en s'éloignant l'un de l'autre et vers une seconde section de surface respective (11a, 11b), et
la prévision d'au moins un connecteur générant de la pression (21a1-21a4 ; 21b1-21b4), qui est conçu pour comprimer les secondes sections de surface intérieure (12a, 12b) les unes vers les autres de manière à ce que les éléments de jonction soient serrés entre les secondes sections de surface intérieure (12a, 12b).

12. Poutre selon la revendication 11, dans laquelle les sections de poutres ont une section transversale substantiellement rectangulaire ou carrée, de sorte que lesdites sections de surface sont substantiellement planes.

13. Poutre selon la revendication 11 ou 12, dans laquelle au moins une desdites premières et secondes sections de surface est en retrait vers l'intérieur en direction de la cavité par rapport à une section de transition entre une des premières sections de surface (11a, 11b) et une des secondes sections de surface (12a, 12b).

14. Poutre selon l'une quelconque des revendications 11 à 13, dans laquelle ledit coin comprend un corps substantiellement prismatique doté d'une paire de surfaces de coin qui forment ensemble un angle aigu, et une surface de compression dotée d'une surface normale qui coïncide avec une ligne divisant l'angle en deux angles égaux.

15. Instrument agricole comprenant un cadre, qui comprend au moins une poutre selon l'une quelconque des revendications 11 à 14.
